# FASCICULE DE BREVET EUROPEEN

(11) **EP 2 109 548 B1**
(45) Date de publication et mention de la délivrance du brevet: **27.06.2012**
(21) Numéro de dépôt: 08762033.2
(22) Date de dépôt: 04.02.2008
(51) Int. Cl.: B60J 5/10

(54) **OUVRANT ARRIERE DE VEHICULE AUTOMOBILE COMPRENANT UN CADRE EN MATIERE THERMOPLASTIQUE**
HECKÖFFNUNGSFLÜGEL EINES KRAFTFAHRZEUGES MIT THERMOPLASTISCHER EINFASSUNG
MOTOR VEHICLE REAR OPENING LEAF COMPRISING A THERMOPLASTIC SURROUND

(30) Priorité: 05.02.2007 FR 0753077
(43) Date de publication de la demande: 21.10.2009
(73) Titulaire: Compagnie Plastic Omnium, 69007 Lyon (FR)
(72) Inventeur: RAJON, Alexis, F-69004 Lyon (FR); CHERON, Hugues, F-01800 Meximieux (FR)
(74) Mandataire: Remy, Vincent Noel Paul
(86) Numéro de dépôt international: PCT/FR2008/050174
(87) Numéro de publication internationale: WO 2008/104674

(56) Documents cités:
- EP-A2- 0 266 514
- DE-A1- 10 257 694
- FR-A1- 2 399 578
- FR-A1- 2 804 070
- GB-A- 2 078 628

## Description

La présente invention concerne le domaine technique des ouvrants arrière de véhicules automobiles, souvent appelés hayons.

La très grande majorité des ouvrants arrière de l'état de la technique sont réalisés en acier. Une très faible minorité des ouvrants arrière connus sont réalisés en matière plastique thermodurcissable. Enfin, seuls quelques véhicules du marché comprennent un ouvrant arrière réalisé en matériau thermoplastique. L'invention concerne plus particulièrement les ouvrants arrière réalisés en matière thermoplastique, renforcée ou non, telle que du polypropylène.

Il est connu que la matière thermoplastique présente une faible limite élastique (début de déformation plastique à basse contrainte) et donc une résistance à la rupture relativement basse et peut être sujette à une fatigue mécanique au cours de son utilisation. Pour assurer la tenue géométrique d'un ouvrant réalisé en matière thermoplastique tout au long de sa durée d'utilisation, malgré les nombreuses opérations d'ouverture et de fermeture qu'il subit, il est connu de rapporter sur l'ouvrant en matière thermoplastique un ou plusieurs renforts métalliques de grande dimension. On peut citer à titre d'exemple l'ouvrant arrière du véhicule Mazda 5.

Cette conception particulière de l'ouvrant arrière est complexe et coûteuse et ne permet pas de tirer profit des propriétés de légèreté de la matière thermoplastique.

Il est connu, du document GB 2 380 226, un ouvrant comprenant un cadre en matière thermoplastique, une lunette, et au moins un support de fixation pour un vérin, le support de fixation étant agencé pour transmettre des efforts entre le vérin et la lunette.

L'invention a notamment pour but de proposer un ouvrant arrière de véhicule automobile dont le cadre est réalisé en matière thermoplastique et dont la conception permet de s'affranchir de l'utilisation de renforts métalliques de grande taille.

A cet effet, l'invention a pour objet un ouvrant arrière de véhicule automobile conforme à la revendication 1.

Le document EP0266514 décrit le préambule de la revendication 1.

La lunette arrière est parfois également appelée vitre ou vitrage. Le support de fixation est parfois également appelé insert ou platine de fixation. Le cadre est également parfois appelé caisson. Le cadre constitue la partie structurelle de l'ouvrant, c'est à dire la partie apportant l'essentiel de la rigidité de l'ouvrant. Généralement, une peau d'aspect est rapportée sur le cadre.

Un ouvrant arrière de véhicule automobile comprend généralement deux vérins d'assistance à l'ouverture. Les points de fixation des vérins à l'ouvrant forment des zones de concentration d'efforts. Or, la matière thermoplastique n'est pas suffisamment résistante pour encaisser de tels efforts sans subir des déformations, ce qui empêche de relier les vérins directement au cadre réalisé en matière thermoplastique, c'est-à-dire de mettre les vérins en contact direct avec le cadre en matière plastique. En revanche, la lunette de l'ouvrant arrière présente une rigidité suffisante pour supporter de tels efforts.

Grâce à l'invention et à l'agencement particulier du support de fixation, les efforts engendrés par le vérin sont transmis, par l'intermédiaire du support de fixation, directement à la lunette dont la rigidité la rend apte à encaisser de tels efforts. Pour que la transmission des efforts soit directe, il est important que le support de fixation soit en contact avec la lunette. La lunette transmet une partie de ces efforts sur le cadre de l'ouvrant pour permettre l'ouverture de l'ouvrant. En outre, les efforts transmis par la lunette sur le cadre de l'ouvrant sont répartis le long de la périphérie de la lunette. Ainsi, les efforts subits par le cadre de l'ouvrant sont mieux répartis que si les vérins étaient en contact ponctuel direct avec le cadre. Le cadre subit alors moins de déformations.

Grâce à l'invention, on peut se dispenser de l'utilisation de renforts ce qui simplifie la fabrication de l'ouvrant et diminue son coût.

Un ouvrant arrière de véhicule automobile selon l'invention peut en outre comporter l'une ou plusieurs des caractéristiques suivantes.
- Le support de fixation est agencé pour transmettre directement des efforts entre le vérin et la lunette.
- Le support de fixation est solidaire de la lunette.
- Le support de fixation est solidarisé à la lunette par collage, vissage, rivetage ou encapsulage.
- Le support de fixation est en métal.
- Le support de fixation comprend une partie mobile d'une charnière de liaison de l'ouvrant à une caisse de véhicule. On entend par partie mobile, la partie de la charnière liée à l'ouvrant. La partie fixe de la charnière est liée à la caisse du véhicule. L'invention trouve une application particulièrement intéressante lorsque les vérins sont reliés en partie haute de l'ouvrant. En effet, dans cette configuration, le bras de levier est faible et les efforts à fournir par les vérins sont grands. Il est donc important de répartir correctement les efforts fournis par les vérins, par l'intermédiaire de la partie mobile de la charnière et de la lunette. En outre, la charnière étant directement solidaire de la caisse du véhicule par l'intermédiaire de sa partie fixe, une partie des efforts exercés par les vérins sur la partie mobile de la charnière sont repris par la caisse. Cela réduit donc d'autant les efforts auxquels le cadre en matière thermoplastique est soumis.
- Le support de fixation comprend une partie portée par l'ouvrant d'une serrure latérale de l'ouvrant. Cette partie portée par l'ouvrant peut être aussi bien une gâche qu'un organe de verrouillage. Dans ce cas, lorsque l'ouvrant est en position fermée, la partie de la serrure portée par l'ouvrant est en contact avec une autre partie de la serrure portée par la caisse du véhicule. Or, les vérins exercent un effort maximal lorsqu'ils sont comprimés au maximum, c'est-à-dire lorsque l'ouvrant est en position fermée. Dans cette position, la serrure est fermée et ainsi une partie des efforts exercés par les vérins sur la partie de la serrure portée par l'ouvrant sont repris par la partie portée par la caisse, ce qui réduit les efforts appliqués sur le cadre de l'ouvrant.
- Les moyens de fixation comprennent une rotule de fixation du vérin.
- La lunette est solidarisée au cadre par collage, vissage ou rivetage.
- La lunette est en verre, de préférence d'une épaisseur au moins égale à 3 millimètres. Le verre est un matériau particulièrement résistant puisque sa rigidité est équivalente à celle de l'aluminium. Par conséquent, en utilisant une lunette en verre d'une épaisseur d'au moins 3 mm, on est assuré que les efforts imposés par les vérins seront correctement repris par la lunette.

L'invention a également pour objet une partie mobile d'une serrure latérale pour ouvrant arrière de véhicule automobile selon l'invention, comprenant une plage de solidarisation à une lunette de l'ouvrant arrière et une rotule de fixation d'un vérin d'assistance à l'ouverture de l'ouvrant.

L'invention sera mieux comprise à la lecture de la description qui va suivre, donnée uniquement à titre d'exemple et faite en se référant aux dessins annexés dans lesquels :
- la figure 1 est un schéma d'un ouvrant arrière de véhicule automobile selon un premier mode de réalisation de l'invention dans lequel le support de fixation comprend une charnière de liaison de l'ouvrant à la caisse du véhicule ;
- la figure 2 est un schéma d'une variante de l'ouvrant représenté sur la figure 1 ;
- la figure 3 est un schéma d'un ouvrant arrière de véhicule automobile selon un second mode de réalisation de l'invention, dans lequel le support de fixation comprend une serrure latérale de l'ouvrant.

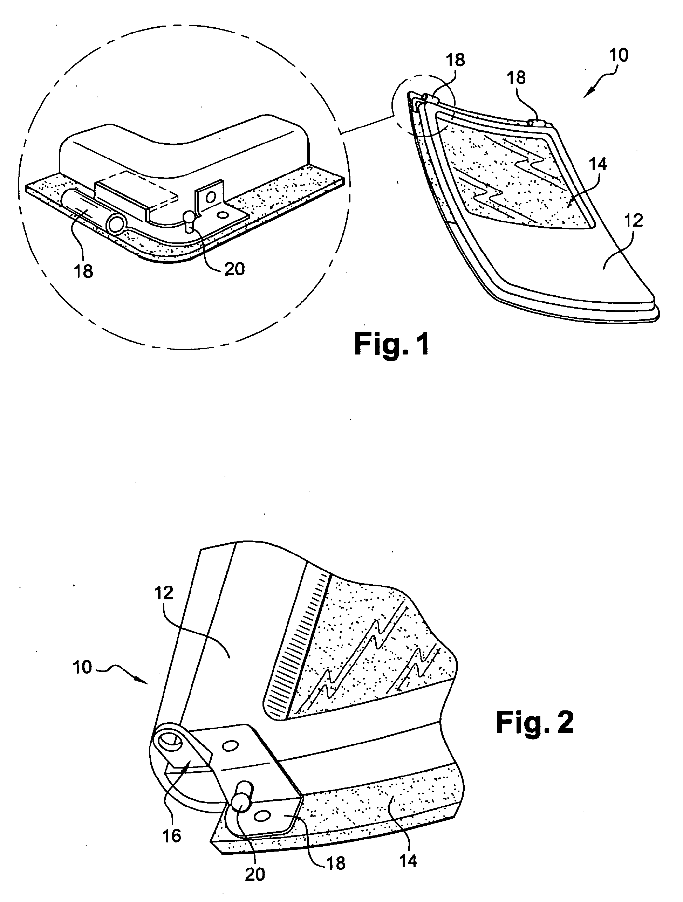

La figure 1 représente un ouvrant arrière, désigné par la référence générale 10, de véhicule automobile, comprenant un cadre 12 et une lunette 14 solidarisée au cadre 12 par exemple par collage, rivetage ou vissage.

Le cadre 12 est réalisé en matière thermoplastique, par exemple par moulage.

Dans les exemples représentés, l'ouvrant arrière est monté mobile autour d'un axe sensiblement horizontal situé à proximité du bord supérieur de l'ouvrant. A cet effet, l'ouvrant arrière 10 comprend deux charnières 16 situées sur son bord supérieur.

Chaque charnière 16 comprend une partie mobile 18 solidaire de l'ouvrant 10 et une partie fixe (non représentée) solidaire de la caisse du véhicule.

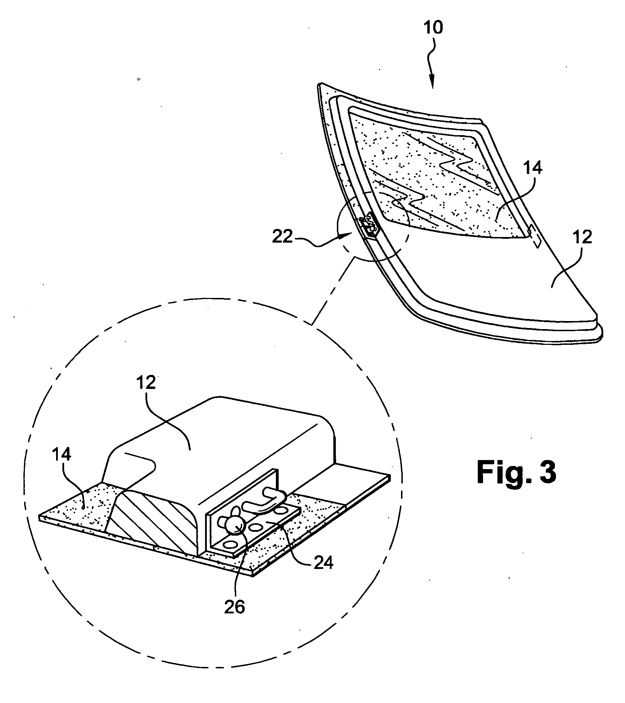

L'ouvrant arrière 10 comprend également deux serrures latérales 22 comprenant chacune une partie mobile 24 portée par l'ouvrant 10 et une partie (non représentée) portée par la caisse du véhicule automobile. Sur l'exemple de la figure 3, la partie mobile 24 portée par l'ouvrant 10 comprend un support métallique sur lequel est rapporté une gâche de serrure également appelée fil de gâche.

Selon un premier mode de réalisation représenté sur la figure 1, la partie mobile 18 de la charnière 16 est en contact avec la lunette et solidarisée à la lunette 14, par exemple par collage, rivetage ou vissage. En outre, la partie mobile 18 de la charnière 16 comprend une rotule 20 de fixation d'un vérin (non représenté) d'assistance à l'ouverture de l'ouvrant 10.

Du fait que la partie mobile 18 de la charnière est fixée directement sur la lunette 14, elle constitue un support de fixation agencé pour transmettre des efforts entre le vérin et la lunette 14. En effet, lorsque le vérin est en action, les efforts qu'il transmet sont directement repris par la lunette par l'intermédiaire de la partie mobile 18 de la charnière 16.

On a représenté sur la figure 2 un ouvrant arrière selon une variante du premier mode de réalisation.

Selon un second mode de réalisation représenté sur la figure 3, la partie 24 de la serrure 22 portée par l'ouvrant 10 est solidarisée à la lunette 14 et comprend une rotule 26 de fixation d'un vérin.

Dans ce mode de réalisation également, la partie 24 de la serrure 22 est agencée pour transmettre des efforts entre le vérin et la lunette 14. En effet, la partie 24, constituant un support de fixation, est fixée directement sur la lunette 14.

Selon une variante non-représentée du premier mode de réalisation, l'ouvrant ne comprend qu'une unique serrure centrale positionnée en partie basse de l'ouvrant.

Selon une autre variante non-représentée du second mode de réalisation, les parties mobiles 24 des deux serrures latérales ne sont pas fixées à la lunette et conservent leur fonction de support de fixation des deux vérins latéraux d'assistance à l'ouverture de l'ouvrant. Cela est possible car dans cette configuration, les efforts engendrés par les vérins sont réduits du fait que le bras de levier est relativement important. Une forme adaptée des parties mobiles 24 permet de transmettre les efforts sur le cadre de l'ouvrant sans créer de zones de concentration d'efforts.

## Revendications

1. Huyon (10) de véhicule automobile, comprenant un cadre (12) réalisé en matière thermoplastique, une lunette (14) solidarisée au cadre, et au moins un support de fixation (18 ; 24) comprenant des moyens de fixation (20 ; 26) d'un vérin d'assistance à l'ouverture de l'ouvrant (10), **caractérisé en ce que** le support de fixation (18 ; 24) est agencé pour transmettre directement des efforts entre le vérin et la lunette (14), le support de fixation (18 ;24) étant en contact avec la lunette (14).

2. Huyon (10) selon la revendication précédente, dans lequel le support de fixation (18, 24) est solidaire de la lunette (14).

3. Huyon (10) selon la revendication précédente, dans lequel le support de fixation (18 ; 24) est solidarisé à la lunette (14) par collage, vissage, rivetage ou encapsulage.

4. Huyon (10) selon l'une quelconque des revendications précédentes, dans lequel le support de fixation (18 ; 24) est en métal.

5. Huyon (10) selon l'une quelconque des revendications précédentes, dans lequel le support de fixation (18 ; 24) comprend une partie (18) mobile d'une charnière (16) de liaison de l'ouvrant à une caisse du véhicule.

6. Huyon (10) selon l'une quelconque des revendications précédentes, dans lequel le support de fixation (18 ; 24) comprend une partie (24) portée par l'ouvrant d'une serrure (22) latérale de l'ouvrant.

7. Huyon (10) selon l'une quelconque des revendications précédentes, dans lequel les moyens de fixation (20 ; 26) comprennent une rotule (20 ; 26) de fixation du vérins.

8. Huyon (10) selon l'une quelconque des revendications précédentes, dans lequel la lunette (14) est solidarisée au cadre (12) par collage, vissage ou rivetage.

9. Huyon (10) selon l'une quelconque des revendications précédentes, dans lequel la lunette (14) est en verre, de préférence d'une épaisseur au moins égale à 3 mm.

10. Partie mobile d'une serrure latérale (24) pour Huyon (10) de véhicule automobile selon l'une quelconque des revendications précédentes, **caractérisée en ce qu'**elle comprend une plage de solidarisation à une lunette (14) de l'ouvrant arrière et une rotule (26) de fixation d'un vérin d'assistance à l'ouverture de l'ouvrant (10).

## Claims

1. Tailgate (10) of a motor vehicle, comprising a frame (12) made of thermoplastic, a rear window (14) secured to the frame, and at least one fixing mount (18; 24) comprising means (20; 26) for attaching a cylinder actuator to assist with the opening of the opening leaf (10) **characterized in that** the fixing mount (18; 24) is designed to transmit forces directly between the cylinder actuator and the rear window (14), the fixing mount (18, 24) being in contact with the rear window (14).

2. Tailgate (10) according to the previous claim, wherein the fixing mount (18; 24) is attached to the rear window (14).

3. Tailgate (10) according to the previous claim, wherein the fixing mount (18; 24) is attached to the rear window (14) by bonding, screwing, riveting or encapsulating.

4. Tailgate (10) according to any of the previous claims, wherein the fixing mount (18; 24) is made of metal.

5. Tailgate (10) according to any of the previous claims, wherein the fixing mount (18; 24) comprises a movable part (18) of a hinge (16) connecting the opening leaf to a vehicle body.

6. Tailgate (10) according to any of the previous claims, wherein the fixing mount (18; 24) comprises a part (24) supported by the opening leaf of a side lock (22) of the opening leaf.

7. Tailgate (10) according to any of the previous claims, wherein the fixing means (20; 26) comprises a ball joint (20; 26) for attaching the cylinder actuator.

8. Tailgate (10) according to any of the previous claims, wherein the rear window (14) is secured to the frame (12) by bonding, screwing or riveting.

9. Tailgate (10) according to any of the previous claims, wherein the rear window (14) is made of glass, preferably at least 3 millimetres thick.

10. Movable part of a side lock (24) for tailgate (10) of a motor vehicle according to any of the previous claims, **characterised in that** it comprises an area for securing to a window (14) of the rear opening leaf and a ball joint (26) for attaching a cylinder actuator to assist with the opening of the opening leaf (10).

## Patentansprüche

1. Heckklappe (10) eines Kraftfahrzeugs, die einen Rahmen (12), der aus Thermoplastmaterial hergestellt ist, ein Heckfenster (14), das fest mit dem Rahmen verbunden ist, und mindestens einen Befestigungsträger (18; 24) aufweist, der Befestigungsmittel (20; 26) eines Zylinders zum Unterstützen des Öffnens der Heckklappe (10) aufweist, **dadurch gekennzeichnet, dass** der Befestigungsträger (18; 24) eingerichtet ist, um die Kräfte zwischen dem Zylinder und dem Heckfenster (14) direkt zu übertragen, wobei der Befestigungsträger (18; 24) mit dem Heckfenster (14) in Berührung ist.

2. Heckklappe (10) nach dem vorhergehenden Anspruch, bei der der Befestigungsträger (18, 24) fest mit dem Heckfenster (14) verbunden ist.

3. Heckklappe (10) nach dem vorhergehenden Anspruch, bei der der Befestigungsträger (18; 24) durch Kleben, Schrauben, Nieten oder Einkapseln fest mit dem Heckfenster (14) verbunden ist.

4. Heckklappe (10) nach einem der vorhergehenden Ansprüche, bei der der Befestigungsträger (18; 24) aus Metall besteht.

5. Heckklappe (10) nach einem der vorhergehenden Ansprüche, bei der der Befestigungsträger (18; 24) einen beweglichen Teil (18) eines Verbindungsschamiers (16) der Heckklappe mit einer Karosserie des Fahrzeugs aufweist.

6. Heckklappe (10) nach einem der vorhergehenden Ansprüche, bei der der Befestigungsträger (18; 24) einen Teil (24) eines seitlichen Schlosses (22) der Heckklappe, der von der Heckklappe gehalten wird, aufweist.

7. Heckklappe (10) nach einem der vorhergehenden Ansprüche, bei der die Befestigungsmittel (20; 26) ein Gelenk (20; 26) zum Befestigen des Zylinders aufweisen.

8. Heckklappe (10) nach einem der vorhergehenden Ansprüche, bei der das Heckfenster (14) durch Kleben, Schrauben oder Nieten fest mit dem Rahmen (12) verbunden ist.

9. Heckklappe (10) nach einem der vorhergehenden Ansprüche, bei der das Heckfenster (14) aus Glas besteht, vorzugsweise mit einer Stärke von mindestens 3 mm.

10. Beweglicher Teil eines seitlichen Schlosses (24) für eine Heckklappe (10) eines Kraftfahrzeugs nach einem der vorhergehenden Ansprüche, **dadurch gekennzeichnet, dass** er einen Bereich einer festen Verbindung mit einem Heckfenster (14) der Heckklappe und ein Gelenk (26) zum Befestigen eines Zylinders zum Unterstützen des Öffnens der Heckklappe (10) aufweist.
